# FASCICULE DE BREVET EUROPEEN

(11) **EP 1 867 508 B1**
(45) Date de publication et mention de la délivrance du brevet: **08.07.2009**
(21) Numéro de dépôt: 07301068.8
(22) Date de dépôt: 29.05.2007
(51) Int. Cl.: B60J 1/02, B60J 1/18

(54) **Vitrage laissant passer les ondes éléctromagnetiques et véhicule équipé d'utel vitrage**
Für elektromagnetische Wellen durchlässige Verglasung und Fahrzeug mit einer solchen Verglasung
Glazing allowing the passage of electromagnetic waves and vehicle with such a glazing

(30) Priorité: 15.06.2006 FR 0605353
(43) Date de publication de la demande: 19.12.2007
(73) Titulaire: Peugeot Citroën Automobiles SA, 78943 Vélizy-Villacoublay Cedex (FR)
(72) Inventeur: Bonassi, Jean-Luc, 25200, MONTBELIARD (FR); Steinmetz, Gérard, 25200, MONTBELIARD (FR); Abalain, Laurent, 92120, MONTROUGE (FR)
(74) Mandataire: Gendraud, Pierre

(56) Documents cités:
- EP-A- 0 997 266
- WO-A-00/72634
- WO-A2-01/51279
- US-A1- 2002 094 407
- US-A1- 2003 232 197
- US-B1- 6 410 120

## Description

La présente invention est relative à un vitrage athermique tel qu'un pare brise, adapté pour laisser passer des ondes électromagnétiques.

Afin de limiter l'échauffement par rayonnement solaire de l'habitacle de véhicules automobiles comportant d'importantes parois vitrées, il est connu d'utiliser pour réaliser certaines de ces parois des vitrages athermiques. C'est en particulier le cas des vitrages destinés à réaliser les pare brises qui doivent conserver une transparence suffisante pour permettre au conducteur d'avoir une bonne visibilité.

Ces vitrages athermiques sont des vitrages qui comportent une couche constituée de particules métalliques réfléchissantes, telles que les particules d'argent, qui limitent la transmission à travers la vitre des rayonnements solaires et en particulier des rayonnements infrarouges issus du soleil.

Afin d'éviter la corrosion des particules réfléchissantes, il est connu, par exemple du document US 2003/0232197, de réaliser une épargne sur le pourtour des vitrages. Cette épargne évite ainsi toute trace de corrosion qui nuirait à l'esthétique du vitrage. Ce document correspond au préambule de la revendication 1.

Du fait de la présence de cette couche contenant des particules métalliques, de tels vitrages athermiques présentent l'inconvénient de ne pas transmettre les ondes électromagnétiques. Aussi, lorsque l'on souhaite disposer des capteurs électromagnétiques à l'intérieur de l'habitacle d'un véhicule automobile derrière une vitre athermique, il est nécessaire de prévoir dans la couche réfléchissante, des réserves destinées à définir sur la vitre des plages qui peuvent être traversées par les ondes électromagnétiques. Cependant, on constate que pour certains types d'ondes électromagnétiques, en particulier pour les ondes du type FM de telles réserves ne sont pas suffisantes et ne permettent pas un bon passage des ondes électromagnétiques à travers la vitre. Il en résulte des difficultés pour capter certains types d'ondes électromagnétiques à l'aide de capteurs tels que des antennes disposées derrière de tels vitrages athermiques.

Le but de la présente invention est de remédier à cet inconvénient en proposant un vitrage athermique pouvant être utilisé pour réaliser par exemple un pare brise de véhicule automobile, et permettant assurément le passage des diverses ondes électromagnétiques.

A cet effet, l'invention a pour objet un ensemble selon la revendication 1.

De préférence, la marge est suffisante pour que, lorsque le vitrage est monté sur un cadre support comportant des montants métalliques, les montants métalliques du cadre et la couche de particules réfléchissantes délimitent entre eux une bande périphérique de largeur supérieure à 6 mm empêchant les interactions électromagnétiques entre la couche de particules réfléchissantes du vitrage et les montants métalliques du support de façon à permettre le passage des ondes électromagnétiques.

Le vitrage peut comporter, à sa périphérie, une bande sérigraphiée destinée à occulter la marge périphérique de la réserve laissée libre par la couche de particules métalliques.

Le vitrage selon l'invention constitue par exemple un pare brise.

De préférence, la marge périphérique de la réserve est destinée à permettre le passage des ondes électromagnétiques du type FM, possédant une bande de fréquence comprise entre 75 MHz et 108 MHz.

L'invention concerne également un véhicule automobile comprenant au moins un vitrage selon l'invention.

Le véhicule automobile peut comprendre au moins une antenne destinée à recevoir des ondes électromagnétiques du type FM disposée dans l'habitacle, en regard de la réserve prévue dans la couche de particules métalliques du vitrage athermique.

L'invention va maintenant être décrite de façon plus précise mais non limitative, en regard des figures annexées dans lesquelles :
- la figure 1 est une vue en perspective schématique d'un véhicule automobile comportant un pare-brise constitué d'un vitrage athermique ;
- la figure 2 est une vue en coupe d'un montant latéral d'encadrement d'un pare brise de véhicule automobile ;
- la figure 3 est une vue schématique d'un vitrage athermique destiné à réaliser un pare brise de véhicule automobile.

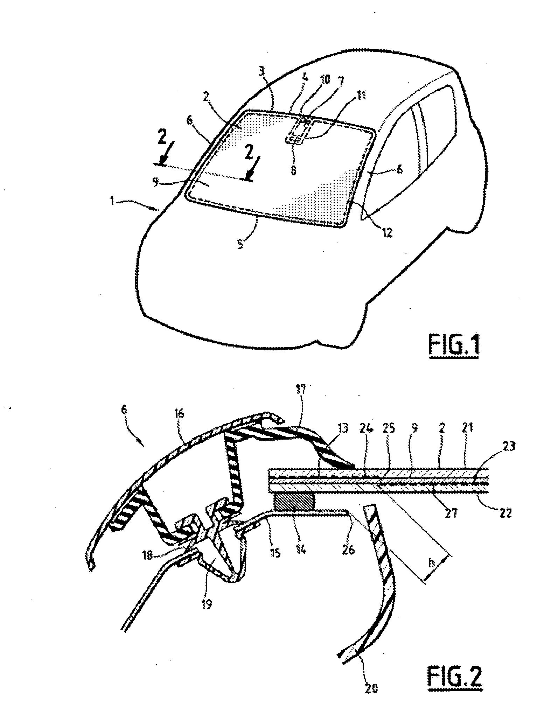

Le véhicule automobile, repéré généralement par 1 à la figure 1, comporte de façon classique un pare brise 2 reçu dans un cadre 3 constitué par une traverse horizontale supérieure 4, une traverse horizontale inférieure 5 et deux montants latéraux 6.

A l'intérieur de l'habitacle, le véhicule automobile comporte d'une part une antenne 7 adaptée à recevoir des ondes électromagnétiques du type FM, et un badge 8 destiné à permettre l'identification automatique du véhicule lors du passage des postes de péage automatiques à détection électromagnétique de véhicule. L'antenne 7 et le badge 8 sont disposés à proximité de la traverse horizontale supérieure 4, en regard du pare brise 2.

Le pare brise 2 est constitué d'un vitrage athermique connu en lui-même. Un tel vitrage est, par exemple, constitué de deux feuilles de verre reliées l'une à l'autre par une couche adhésive de polyvinylbutyral, aussi appelé PVB, possédant une épaisseur d'environ 1 mm. Des particules métalliques, telles que les particules d'argent, destinées à réfléchir les rayonnements solaires, et en particulier les rayonnements infrarouges sont disposées entre une feuille de verre et la couche de PVB.

La couche de particules métalliques, partiellement réfléchissante, s'étend sur une zone 9 concernant l'essentiel de la surface du pare brise en laissant libre néanmoins une réserve 10 destinée à laisser passer les ondes électromagnétiques de façon à ce que ces ondes électromagnétiques puissent atteindre les capteurs constitués par l'antenne 7 ou par le badge 8.

La réserve 10, qui correspond à une zone du pare brise ne comportant pas de couche partiellement réfléchissante, comprend une première zone 11 de forme généralement rectangulaire venant en regard des capteurs électromagnétiques 7 et 8, et d'autre part d'une bande ou marge 12 s'étendant sur la périphérie de l'ensemble du pare brise.

La zone rectangulaire 11 est de taille suffisante de façon à laisser un certain espace autour des capteurs électromagnétiques.

En outre, la bande ou marge 12 a une largeur adaptée pour laisser un espace suffisant entre le bord de la couche de particules métalliques partiellement réfléchissante et les parties métalliques du cadre support du pare brise, de façon à éviter la création d'un environnement électromagnétique non fini du fait des interactions entre la couche de particules métalliques et le cadre métallique du pare brise.

Ce type de bande est particulièrement nécessaire, lorsque le pare-brise est muni de capteurs électromagnétiques adaptés à recevoir des ondes électromagnétiques du type FM, possèdent classiquement une bande de fréquence comprise entre 75 MHz et 108 MHz.

Bien évidemment, cette bande peut également être destinée à laisser passer d'autres types ondes électromagnétiques.

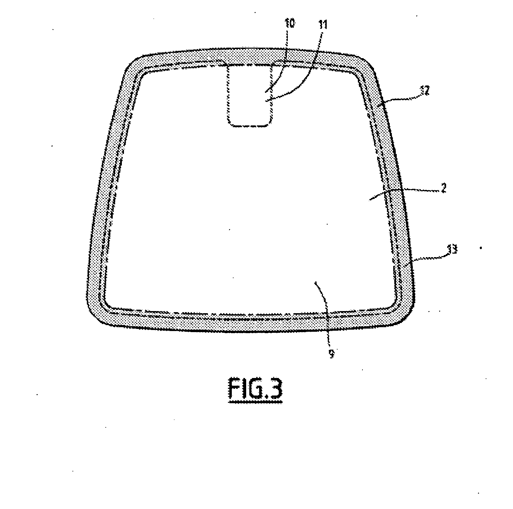

Comme on le voit sur la figure 3, le pourtour du pare brise comporte en outre une bande déposée par sérigraphie 13 destinée à dissimuler la bande périphérique du pare brise correspondant à la réserve périphérique prévue dans la couche de particules métalliques partiellement réfléchissante.

En effet, la zone centrale du pare brise 9 possédant la couche de particules métalliques réfléchissantes, et qui est la partie du pare brise à travers laquelle le conducteur regarde l'extérieur, est légèrement teintée, alors que la zone de réserve, du fait de l'absence des particules métalliques, n'est pas teintée.

Afin de donner un bon aspect à ce pare brise, il est donc souhaitable de disposer autour du pare brise une bande sérigraphiée un peu plus foncée qui fait apparaître la partie centrale du pare brise comme étant la seule partie bien transparente.

Bien évidemment, cette bande sérigraphée périphérique 13 n'est pas indispensable.

Comme le montre la figure 2, le pare brise 2 comporte une couche vitrée supérieure 21 et une couche vitrée inférieure 22 et entre ces deux couches, une couche intermédiaire 23 en PVB. Selon l'exemple de réalisation, ici représenté, la couche de particules métalliques partiellement réfléchissante 27 est disposée entre la couche vitrée inférieure 22 et la couche intermédiaire 23 en PVB. La couche de particules métalliques 27 présente sur la zone centrale 9 du pare brise, s'étend jusqu'à la bordure 25 se trouvant en retrait par rapport à la bordure du pare brise.

La zone comprise entre la bordure du pare brise et la bordure 25 de la couche de particules métalliques partiellement réfléchissante comprend une couche 24 qui constitue la bande sérigraphiée 13. Selon l'exemple de réalisation, ici représenté, la couche 24 est disposée entre la couche vitrée supérieure 21 et la couche intermédiaire 23 en PVB

Le pare brise est collé par l'intermédiaire d'un joint de colle 14 sur une feuillure métallique 15 d'un montant latéral, repéré généralement par 6, du cadre support du pare brise.

Le montant latéral 6 du pare brise comporte, en outre, un parement extérieur 16 porté par un joint 17 et fixé sur la feuillure métallique 15 par l'intermédiaire d'un moyen d'encliquetage 18 pénétrant dans un trou 19 prévu dans la feuillure 15. Cet ensemble est camouflé à l'intérieur du véhicule par un parement intérieur 20.

Pour que le vitrage athermique puisse laisser passer les ondes électromagnétiques dans des conditions satisfaisantes, il est nécessaire que la largeur h de la bande comprise entre la bordure 25 de la couche 27 de particules métalliques partiellement réfléchissante, et la bordure 26 de la feuillure 15 se trouvant en regard du pare brise, soit suffisante.

Il est souhaitable que cette largeur h soit supérieure à 6 mm, mieux supérieure à 10 mm et mieux encore supérieure à 15 mm, voire 20 mm.

Il est bien évident que cette largeur doit être suffisante, non seulement le long des montants latéraux du cadre 3, mais également, au moins le long de la traverse supérieure 4, et de préférence, le long de la traverse inférieure 5.

Le vitrage athermique tel qu'il vient d'être décrit doit comporter une réserve autour de la couche de particules métalliques, de préférence tout autour de la vitre mais essentiellement au voisinage de la zone destinée à recevoir des capteurs électromagnétiques.

De tels vitrages peuvent être utilisés pour réaliser des pare brises classiques, mais de préférence des pare brises de grande dimension. Ils peuvent aussi être utilisés pour réaliser des vitrages de véhicule ayant des pavillons panoramiques ou partiellement panoramiques.

Naturellement, les dispositions des réserves destinées à laisser passer les ondes électromagnétiques doivent être adaptées à chaque implantation particulière de capteurs électromagnétiques.

L'homme du métier saura adapter cette implantation en fonction des circonstances, la caractéristique principale étant que le pare brise doit comporter des réserves à la périphérie destinées à éviter la création d'un environnement électromagnétique non fini du fait des interactions entre la couche de particules métalliques partiellement réfléchissante et les montants métalliques de la structure support du vitrage.

Bien évidemment, l'invention peut s'adapter à d'autres types de vitrage athermique, tels que ceux dont la couche de particules métalliques partiellement réfléchissante est disposée entre l'une des couches vitrées et la couche intermédiaire en PVB et dont la bande déposée par sérigraphie est disposée sur la partie extérieure d'une des couches vitrées, notamment sur celle orientée vers l'intérieur de l'habitacle du véhicule.

## Revendications

1. Ensemble comportant un vitrage athermique et un cadre support (3) appartenant à la caisse d'un véhicule automobile et comportant des montants métalliques (4, 5, 6), le vitrage athermique étant du type comprenant une couche de particules métalliques partiellement réfléchissante s'étendant sur une zone (9) du vitrage en laissant libre une réserve (10) destinée à laisser passer des ondes électromagnétiques à travers le vitrage en direction d'un capteur électromagnétique (7, 8), **caractérisé en ce que** la réserve (10) comprend une marge périphérique (12) s'étendent sur la périphérie de l'ensemble du vitrage, la marge périphérique (12) étant de largeur suffisante pour que, lorsque le vitrage est monté sur le cadre support (3), il n'y ait pas d'interactions entre la couche de particules métalliques et les montants métalliques du cadre support empêchant la transmission des ondes électromagnétiques à travers le vitrage.

2. Ensemble selon la revendication 1, **caractérisé en ce que** la marge (12) est suffisante pour que, lorsque le vitrage est monté sur le cadre support (3), les montants métalliques du cadre et la couche de particules réfléchissantes délimitent entre eux une bande périphérique (12) de largeur supérieure à 6 mm empêchant les interactions entre la couche de particules réfléchissantes du vitrage et les montants métalliques du support, de façon à permettre le passage des ondes électromagnétiques.

3. Ensemble selon la revendication 1 ou 2, **caractérisé en ce que** le vitrage comporte, à sa périphérie, une bande sérigraphiée (13) destinée à occulter la marge périphérique (12) de la réserve (10) laissée libre par la couche de particules métalliques.

4. Ensemble selon l'une quelconque des revendications 1 à 3, **caractérisé en ce que** le vitrage constitue un pare brise.

5. Ensemble selon l'une quelconque des revendications 1 à 4, **caractérisé en ce que** la marge périphérique (12) de la réserve (10) est destinée à permettre le passage des ondes électromagnétiques du type FM, possédant une bande de fréquence comprise entre 75 MHz et 108 MHz.

6. Véhicule automobile (1) **caractérisé en ce qu'**il comprend au moins un ensemble selon l'une quelconque des revendications 1 à 5.

7. Véhicule automobile (1) selon la revendication 6, **caractérisé en ce qu'**il comprend au moins une antenne (7) destinée à recevoir des ondes électromagnétiques du type FM disposée dans l'habitacle, en regard de la réserve (10) prévue dans la couche de particules métalliques du vitrage athermique.

## Claims

1. Assembly comprising heat-absorbing glazing and a support surround (3) belonging to the body shell of a motor vehicle and comprising metal members (4, 5, 6), the heat-absorbing glazing being of the type comprising a partially reflective layer of metallic particles extending over a zone (9) of the glazing leaving an empty space (10) intended to allow electromagnetic waves to pass through the glazing towards an electromagnetic sensor (7, 8), **characterized in that** the empty space (10) comprises a peripheral margin (12) extending around the periphery of the entire glazing, the peripheral margin (12) being wide enough that, when the glazing is mounted on the support surround (3), there is no interaction between the layer of metallic particles and the metal members of the support surround that might prevent electromagnetic waves from being transmitted through the glazing.

2. Assembly according to Claim 1, **characterized in that** the margin (12) is large enough that when the glazing is mounted on the support surround (3), the metal members of the surround and the layer of reflective particles between them delimit a peripheral strip (12) wider than 6 mm wide, preventing interactions between the layer of reflective particles of the glazing and the metal members of the support, so as to allow electromagnetic waves to pass through.

3. Assembly according to Claim 1 or 2, **characterized in that** the glazing comprises, at its periphery, a screen-printed strip (13) intended to conceal the peripheral margin (12) of the empty space (10) left free by the layer of metallic particles.

4. Assembly according to any one of Claims 1 to 3, **characterized in that** the glazing constitutes a windscreen.

5. Assembly according to any one of Claims 1 to 4, **characterized in that** the peripheral margin (12) of the empty space (10) is intended for the passage of electromagnetic waves of the FM type, having a frequency band of between 75 MHz and 108 MHz.

6. Motor vehicle (1), **characterized in that** it comprises at least one assembly according to any one of Claims 1 to 5.

7. Motor vehicle (1) according to Claim 6, **characterized in that** it comprises at least one antenna (7) intended to receive electromagnetic waves of the FM type, which is positioned inside the cabin, facing the empty space (10) left in the layer of metallic particles of the heat-absorbing glazing.

## Patentansprüche

1. Baugruppe, umfassend eine wärmeabsorbierende Verglasung und einen zur Fahrzeugkarosserie gehörigen Tragrahmen (3), und mit Metallstreben (4, 5, 6), wobei die wärmeabsorbierende Verglasung des Typs ist, der eine partiell reflektierende Metallpartikelschicht aufweist, die in einem Bereich (9) der Verglasung verläuft und eine Reserve (10) frei lässt, die dazu bestimmt ist, elektromagnetische Wellen in Richtung eines elektromagnetischen Sensors (7, 8) durch die Verglasung durchzulassen, **dadurch gekennzeichnet, dass** die Reserve (10) einen Umfangsrand (12) umfasst, der auf dem Umfang der gesamten Verglasung verläuft, wobei der Umfangsrand (12) eine Breite hat, die groß genug ist, damit es zwischen der Metallpartikelschicht und den Metallstreben des Tragrahmens keine Wechselwirkungen gibt, die den Durchgang der elektromagnetischen Wellen durch die Verglasung verhindern, wenn die Verglasung auf dem Tragrahmen (3) montiert ist.

2. Baugruppe nach Anspruch 1, **dadurch gekennzeichnet, dass** der Rand (12) ausreicht, damit zwischen den Metallstreben des Rahmens und der reflektierenden Partikelschicht ein Umfangsstreifen (12) mit einer Breite größer als 6 mm definiert wird, der die Wechselwirkungen zwischen der reflektierenden Partikelschicht der Verglasung und den Metallstreben des Trägers verhindert, um den Durchgang der elektromagnetischen Wellen zuzulassen.

3. Baugruppe nach Anspruch 1 oder 2, **dadurch gekennzeichnet, dass** die Verglasung an ihrem Umfang einen Siebdruckstreifen (13) aufweist, der dazu bestimmt ist, den Umfangsrand (12) der von der Metallpartikelschicht frei gelassenen Reserve (10) zu verdecken.

4. Baugruppe nach einem der Ansprüche 1 bis 3, **dadurch gekennzeichnet, dass** die Verglasung eine Windschutzscheibe formt.

5. Baugruppe nach einem der Ansprüche 1 bis 4, **dadurch gekennzeichnet, dass** der Umfangsrand (12) der Reserve (10) dazu bestimmt ist, den Durchgang von elektromagnetischen Wellen des FM-Typs zuzulassen, die ein Frequenzband zwischen 75 MHz und 108 MHz haben.

6. Kraftfahrzeug (1), **dadurch gekennzeichnet, dass** es mindestens eine Baugruppe nach einem der Ansprüche 1 bis 5 aufweist.

7. Kraftfahrzeug (1) nach Anspruch 6, **dadurch gekennzeichnet, dass** es mindestens eine Antenne (7) aufweist, die dazu bestimmt ist, elektromagnetische Wellen des FM-Typs zu empfangen, die der in der Metallpartikelschicht der wärmeabsorbierenden Verglasung vorgesehenen Reserve (10) gegenüberstehend in der Fahrgastzelle angeordnet ist.
